Europäisches Patentamt

**European Patent Office**

Office européen des brevets

(19)

(11) **EP 0 914 373 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(21) Anmeldenummer: **97934536.0**

(22) Anmeldetag: **24.07.1997**

(51) Int Cl.⁷: **C08L 51/00**

(86) Internationale Anmeldenummer:
**PCT/EP97/04023**

(87) Internationale Veröffentlichungsnummer:
**WO 98/004622 (05.02.1998 Gazette 1998/05)**

(54) **Verwendung einer Formmasse zur Herstellung von Gehäusen für Gartengeräte**

Use of a molding material for producing housings for gardening implements

Utilisation d'une matière moulable pour des abris pour outils de jardinage

(84) Benannte Vertragsstaaten:
**BE DE ES FR GB IT NL**

(30) Priorität: **25.07.1996 DE 19630061**

(43) Veröffentlichungstag der Anmeldung:
**12.05.1999 Patentblatt 1999/19**

(73) Patentinhaber: **BASF AKTIENGESELLSCHAFT**
**67056 Ludwigshafen (DE)**

(72) Erfinder:
- **NAARMANN, Herbert**
**D-67227 Frankenthal (DE)**
- **MC KEE, Graham, Edmund**
**D-67433 Neustadt (DE)**
- **PIRKER, Alfred**
**D-67346 Speyer (DE)**
- **STERZEL, Hans-Josef**
**D-67125 Dannstadt-Schauernheim (DE)**
- **BRANDSTETTER, Franz**
**D-67435 Neustadt (DE)**

- **VON BERNSTORFF, Bernd-Steffen**
**D-67157 Wachenheim (DE)**
- **ROSENAU, Bernhard**
**D-67434 Neustadt (DE)**
- **ENDEMANN, Ulrich**
**D-67227 Frankenthal (DE)**
- **STRAUBE, Burkhard**
**D-67059 Ludwigshafen (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
| | |
|---|---|
| EP-A- 0 260 558 | EP-A- 0 370 242 |
| EP-A- 0 450 485 | EP-A- 0 476 942 |
| EP-A- 0 522 370 | EP-A- 0 560 496 |
| EP-A- 0 592 953 | WO-A-91/01350 |
| DE-A- 4 227 999 | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft die Verwendung einer von ABS verschiedenen Formmasse zur Herstellung von Gehäusen für Gartengeräte. Die Gehäuse weisen gute Maßhaltigkeit, hohe Kratzfestigkeit und Witterungsbeständigkeit auf.

Für die Herstellung von Gehäusen für Gartengeräte werden bislang verschiedene Werkstoffe eingesetzt.

Beispielsweise kommt ABS (Acrylnitril/Butadien/Styrol-Copolymer) zum Einsatz. Nicht für alle Anwendungen ist jedoch die Vergilbungs- und Versprödungsbeständigkeit ausreichend.

Weiterhin wird HIPS (High Impact Polystyrene: schlagzähes Polystyrol) eingesetzt. Auch hierbei ist nicht für alle Anwendungen die Vergilbungsund Versprödungsbeständigkeit ausreichend. Zudem ist für manche Anwendungen die Kratzfestigkeit und das Steifigkeits/Zähigkeitsverhältnis ungünstig.

Weiterhin wird Polypropylen (PP) eingesetzt. Es weist eine Schwindung bei der Formgebung sowie die Neigung zu Verzug und Ausbildung von Einfallstellen auf. Zudem sind die mechanischen Eigenschaften, wie das Steifigkeits/-Zähigkeits-Verhältnis nicht immer ausreichend.

Aufgabe der vorliegenden Erfindung ist es, Gehäuse für Gartengeräte bereitzustellen, die in einem einstufigen Verfahren, ohne Nachbearbeitung herstellbar sind, einfallstellenfrei sind und eine gute Maßhaltigkeit aufweisen.

Eine weitere Aufgabe der Erfindung ist die Bereitstellung von Gehäusen für Gartengeräte, die kratzfest und witterungsbeständig sind und eine hohe Stabilität aufweisen.

Eine weitere Aufgabe der vorliegenden Erfindung ist die Bereitstellung von Gehäusen für Gartengeräte, die gegenüber den bisher eingesetzten Gehäusen überlegene Eigenschaften zeigen.

Erfindungsgemäß werden diese Aufgaben gelöst durch die Verwendung einer von ABS verschiedenen thermoplastischen Formmasse, enthaltend, bezogen auf die Summe der Mengen der Komponenten A B, und C und ggf. D, die insgesamt 100 Gew.-% ergibt.

a: 1 - 99 Gew.-% eines teilcheaförmigen Emulsionspolymerisats mit einer Glasübergangstemperatur unterhalb von 0°C und einer mittleren Teilchengröße von 50 - 1000 nm als Komponente A, wobei es sich um ein Pfropfcopolymerisat handelt aus

a1: 1 - 99 Gew.-% einer teilchenförmigen Pfropfgrundlage A1 mit einer Glasüberganstemperatur unterhalb von 0°C, bestehend aus den Monomeren

a11: 80- 99,99 Gew.-% eines $C_{1\text{-}8}$-Alkylesters der Acrylsäure als Komponente A11,

a12: 0,01 - 20 Gew.-% mindestens eines polyfunktionellen vernetzenden Monomeren als Komponente A12,

a2: 1 - 99 Gew.-% einer Pfropfauflage A2 aus den Monomeren, bezogen auf A2,

a21: 40 - 100 Gew.-% Einheiten eines vinylaromatischen Monomeren als Komponente A21 und

a22: bis 60 Gew.-% Einheiten eines ethylenisch ungesättigten Monomeren als Komponente A22,

wobei die Pfropfauflage A2 aus mindestens einer Pfropfhülle besteht

b: 1 - 99 Gew.-% mindestens eines amorphen oder teilkristallinen Polymerisats als Komponente B,

c: 10 - 40 Gew.-% Polycarbonate als Komponente C, und

d: 0 - 50 Gew.-% faser- oder teilchenförmige Füllstoffe oder deren Gemische als Komponente D

zur Herstellung von Gehäusen für Gartengeräte, die zum Schneiden, Trennen, Blasen oder Spritzen dienen.

Die beschriebenen Gehäuse sind kratzfest, stabil und einfallstellenfrei und weisen eine sehr gute Maßhaltigkeit auf. Zudem sind sie sehr witterungsbeständig.

Die zur Herstellung der erfindungsgemäßen Gehäuse erfindungsgemäß verwendeten thermoplastischen Formmassen sind an sich bekannt. Beispielsweise sind in DE-A-12 60 135, DE-C-19 11 882, DE-A-28 26 925, DE-A-31 49 358, DE-A-32 27 555 und DE-A-40 11 162 erfindungsgemäß verwendbare Formmassen beschrieben.

Im folgenden wird die Erfindung näher erläutert.

Zunächst werden die zur Herstellung der erfindungsgemäßen Gehäuse verwendeten Formmassen beschrieben und die Komponenten, aus denen diese aufgebaut sind.

## KOMPONENTE A

Komponente A ist ein teilchenförmiges Emulsionspolymerisat mit einer Glasübergangstemperatur unterhalb von 0°C und einer mittleren Teilchengröße von 50 - 1000 nm.

Es handelt sich bei Komponente A um ein Pfropfcopolymerisat aus

a1: 1 - 99 Gew.-%, vorzugsweise 55 - 80 Gew.-%, insbesondere 55 - 65 Gew.-%, einer teilchenförmigen Pfropfgrundlage A1 mit einer Glasübergangstemperatur unterhalb von 0°C,

a2: 1 - 99 Gew.-%, vorzugsweise 20 - 45 Gew.-%, insbesondere 35 - 45 Gew.-%, einer Pfropfauflage A2 aus den Monomeren, bezogen auf A2,

a21: 40 - 100 Gew.-%, vorzugsweise 65 - 85 Gew.-%, Einheiten, eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols und als Komponente A21

a22: bis 60 Gew.-%, vorzugsweise 15 - 35 Gew.-%, Einheiten eines ethylenisch ungesättigten Monomeren, vorzugsweise des Acrylnitrils oder Methacrylnitrils, insbesondere des Acrylnitrils als Komponente A22.

Die Pfropfauflage A2 besteht dabei aus mindestens einer Pfropfhülle, wobei das Pfropfcopolymerisat A insgesamt eine mittlere Teilchengröße von 50 - 1000 nm aufweist.

Die Komponente A1 besteht aus den Monomeren

a11: 80 - 99,99 Gew.-%, vorzugsweise 95 - 99,9 Gew.-%, eines $C_{1-8}$-Alkylesters der Acrylsäure, vorzugsweise n-Butylacrylat und/oder Ethylhexylacrylat als Komponente A11,

a12: 0,01 - 20 Gew.-%, vorzugsweise 0,1 - 5,0 Gew.-%, mindestens eines polyfunktionellen vernetzenden Monomeren, vorzugsweise Diallylphthalat und/oder DCPA als Komponente A12.

Gemäß einer Ausführungsform der Erfindung beträgt die mittlere Teilchengröße der Komponente A 50 - 800 nm, vorzugsweise 50 - 600 nm.

Gemäß einer weiteren erfindungsgemäßen Ausführungsform ist die Teilchengrößenverteilung der Komponente A bimodal, wobei 60 - 90 Gew.-% eine mittlere Teilchengröße von 50 - 200 nm und 10 - 40 Gew.-% eine mittlere Teilchengröße von 50 - 400 nm aurweisen, bezogen auf das Gesamtgewicht der Komponente A.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere <u>250</u> (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$ und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Die Glasübergangstemperatur des Emulsionspolymerisats A wie auch der anderen erfindungsgemäß verwendeten Komponenten wird mittels DSC (Differential Scanning Calorimetry) nach ASTM 3418 (mid point temperature) bestimmt.

Geeignete Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylät, Allylmethacrylat. Als besonders günstiges Vernetzungsmonomer hat sich Dicyclopentadienylacrylat (DCPA) erwiesen (vgl. DE-C-12 60 135).

**Kern/Schale - Emulsionspolymerisat A**

Bei dem Emulsionspolymerisat A kann es sich auch um ein mehrstufig aufgebautes Polymerisat handeln (sog. "Kern/Schale-Aufbau", "core-shell morphology"). Beispielsweise kann ein kautschukelastischer Kern ($T_g < 0°C$) von einer "harten" Schale (Polymere mit $T_g > 0°C$) umhüllt sein.

Erfindungsgemäß handelt es sich bei der Komponente A um ein Pfropfcopolymerisat. Die Pfropfcopolymerisate A der erfindungsgemäßen Formmassen haben dabei eine mittlere Teilchengröße $d_{50}$ von 50 - 1000 nm, bevorzugt von 50 - 600 nm und besonders bevorzugt von 50 - 400 nm. Diese Teilchengrößen können erzielt werden, wenn man als Pfropfgrundlage A1 dieser Komponente A Teilchengrößen von 50 - 350 nm, bevorzugt von 50 - 300 nm und besonders bevorzugt von 50 - 250 nm verwendet.

Das Pfropfcopolymerisat A ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A-0 230 282, DE-A-36 01 419, EP-A-0 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C, vorzugsweise oberhalb von 50°C haben. Der mehrstufige Aufbau dient u.a. dazu, eine (Teil-)Verträglichkeit der Kautschukteilchen A mit dem Thermoplasten B zu erzielen.

Pfropfcopolymerisate A werden beispielsweise hergestellt durch Pfropfung von mindestens einem der im folgenden aufgeführten Monomeren A2 auf mindestens eine der vorstehend aufgeführten Pfropfgrundlagen bzw. Pfropfkernmaterialien A1.

Geeignete Monomere zur Bildung der Pfropfauflage A2 können beispielsweise aus den im folgenden aufgeführten Monomeren und deren Gemischen ausgewählt sein:

Als Vinylaromatische Monomere A21: Styrol und seine substituierten Derivate, wie α-Methylstyrol, p-Methylstyrol, 3,4-Dimethylstyrol, p-tert.-Butylstyrol, o-und p-Divinylbenzol und p-Methyl-α-methylstyrol; bevorzugt sind Styrol und/oder α-Methylstyrol in kombination mit ethylenisch ungesättigten Monomeren A22, wie Acryl- und Methacrylverbindungen, wie Acrylnitril, Methacrylnitril, Acryl- und Methacrylsäure, Methylacrylat, Ethylacrylat, n- und Isopropylacrylat, n- und Isobutylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimide, z.B. Alkyl- und Arylmaleinimide, wie Methyl- oder Phenylmaleinimid. Bevorzugt sind Acrylnitril und Methacrylnitril, insbesondere Acrylnitril.

Weiterhin können als Comonomeren A22 Styrol-, Vinyl-, Acryl- oder Methacrylverbindungen (z.B. Styrol, wahlweise substituiert mit $C_{1-12}$-Alkylresten, Halogenatomen, Halogenmethylenresten; Vinylnaphthalin, Vinylcarbazol; Vinylether mit $C_{1-12}$-Etherresten; Vinylimidazol, 3-(4-)Vinylpyridin, Dimethylaminoethyl(meth)acrylat, p-Dimethylaminostyrol, Acrylnitril, Methacrylnitril, Acrylsäure, Methacrylsäure, Acrylsäurebutylester, Acrylsäureethylhexylester und Methylmethacrylat sowie Fumarsäure, Maleinsäure, Itaconsäure oder deren Anhydride, Amide, Nitrite oder Ester mit 1 bis 22 C-Atome, vorzugsweise 1 bis 10 C-Atome enthaltenden Alkoholen) verwendet werden.

Gemäß einer Ausführungsform der Erfindung umfaßt Komponente A 50 - 90 Gew.-% der vorstehend beschriebenen Pfropfgrundlage A1 und 10 - 50 Gew.-% der vorstehend beschriebenen Pfropfauflage A2, bezogen auf das Gesamtgewicht der Komponente A.

Erfindungsgemäß dienen als Pfropfgrundlage A1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

In einer bevorzugten Ausführungsform besteht die Pfropfauflage A2 aus mindestens einer Pfropfhülle und die äußerste Pfropfhülle davon hat eine Glasübergangstemperatur von mehr als 30°C, wobei ein aus den Monomeren der Pfropfauflage A2 gebildetes Polymer eine Glasübergangstemperatur von mehr als 80°C aufweisen würde.

Bezüglich der Messung der Glasübergangstemperatur und der mittleren Teilchengröße sowie der Q-Werte gilt für die Pfropfcopolymerisate A das für die Emulsionspolymerisate A Gesagte.

Das Herstellverfahren für Pfropfcopolymerisate A ist die Emulsions-, polymerisation. Bevorzugt werden die Pfropfcopolymerisate A durch radikalische Emulsionspolymerisation hergestellt, insbesondere in Gegenwart von Latices der Komponente A1 bei Temperaturen von 20°C - 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A-28 26 925, 31 49 358 und in der DE-C-12 60 135.

Der Aufbau der Pfropfhüllen erfolgt im Emulsionspolymerisationsverfahren, wie es beschrieben ist in DE-A-32 27 555, 31 49 357, 31 49 358, 34 14 118. Das definierte Einstellen der erfindungsgemäßen Teilchengrößen von 50 - 1000 nm erfolgt bevorzugt nach den Verfahren, die beschrieben sind in der DE-C-12 60 135 und DE-AS-28 26 925, bzw. Applied Polymer Science, Band 9 (1965), Seite 2929. Das Verwenden von Polymerisaten mit unterschiedlichen Teilchengrößen ist beispielsweise bekannt aus DE-A- 28 26 925 und US-PS 5 196 480.

Gemäß dem in der DE-C-12 60 135 beschriebenen Verfahren wird zunächst die Pfropfgrundlage A1 hergestellt, indem der oder die gemäß einer Ausführungsform der Erfindung verwendeten Acrylsäureester und das mehrfunktionelle, die Vernetzung bewirkende Monomere, ggf. zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 - 5 Gew.-%, insbesondere von 1 - 2 Gew.- %, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfäte, wie Kaliumpersulfat. Es können jedoch auch Redoxsysteme zum Einsatz gelangen. Die Initiatoren werden im allgemeinen in Mengen von 0,1 - 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 - 9 eingestellt werden, wie Natriumbicarbonat und Natriumpyrophosphat, sowie 0 - 3 Gew.-% eines Molekulargewichtsreglers, wie Mercaptane, Terpinole oder dimeres α-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureesterpolymerisats einen $d_{50}$-Wert im Bereich von etwa 50 - 1000 nm, vorzugsweise 50 - 150 nm, besonders bevorzugt im Bereich von 80 - 100 nm, besitzt. Die Teilchengrößenverteilung des Latex soll dabei vorzugsweise eng sein. Der Quotient

$$\frac{d_{90} - d_{10}}{d_{50}} = Q$$

soll < 0,5, vorzugsweise < 0,35 sein.

Zur Herstellung des Pfropfpolymerisats A wird sodann in einem nächsten Schritt in Gegenwart des so erhaltenen Latex des vernetzten Acrylsäureester-Polymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polyacrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart des vernetzenden Acrylsäureesterpolymerisats wird so geführt, daß ein Pfropfgrad von 1 - 99 Gew.-%, vorzugsweise 20 - 45 Gew.-%, insbesondere 35 - 45 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-pfropfcopolymerisation entstehen im allgemeinen etwa 5 - 15 Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten 1 - 99 Gew.-%, bevorzugt 55 - 80 und besonders bevorzugt 55 - 65 Gew.-% Pfropfgrundlage A1 und 1 - 99 Gew.-%, bevorzugt 20 - 45, besonders bevorzugt 35 -45 Gew.-% der Pfropfäuflage A2, jeweils bezogen auf das gesamte Pfropfcopolymerisat.

## KOMPONENTE B

Komponente B ist ein amorphes oder teilkristallines Polymerisat.

Vorzugsweise bandelt es sich bei Komponente B um ein Copolymerisat aus

b1: 40 - 100 Gew.-%, vorzugsweise 60 - 70 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente B1,
b2: bis 60 Gew.-%, vorzugsweise 30 - 40 Gew.-%, Einheiten eines ethylenisch ungesättigten Monomers, vorzugsweise des Acrylnitrils oder Methacrylnitrils, insbesondere des Acrylnitrils als Komponente B2.

Gemäß einer bevorzugten Ausführungsform der Erfindung beträgt die Viskositätszahl der Komponente B 50 - 90, vorzugsweise 60 - 80.

Die amorphen oder teükristallinen Polymerisate der Komponente B der zur Herstellung der erfindungsgemäßen Gehäuse erfindungsgemäß verwendeten Formmasse, sind vorzugsweise aus mindestens einem Polymeren aus teilkristallinen Polyamiden, teilaromatischen Copolyamiden, Polyolefinen, Ionomeren, Polyestern, Polyetherketonen, Polyoxyalkylenen, Polyarylensulfiden und Polymeren aus vinylaromatischen Monomeren und/oder ethylenisch ungesättigten Monomeren ausgewählt. Es können auch Polymerisatgemische verwendet werden.

Als Komponente B der zur Herstellung der erfindungsgemäßen Gehäuse erfindungsgemäß verwendeten Formmasse sind teilkristalline, bevorzugt lineare Polyamide wie Polyamid-6, Polyamid-6,6, Polyamid-4,6, Polyamid-6,12 und teilkristalline Copolyamide auf Basis dieser Komponenten geeignet. Des weiteren können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip aus dem Stand der Technik bekannt sind (vgl. Encyclopedia of Polymers, Vol. 11, S. 315 ff.).

Beispiele für als Komponente B der zur Herstellung der erfindungsgemäßen Gehäuse erfindungsgemäß verwendeten Formmassen weiterhin geeignete Polymerisate sind teilkristalline Polyolefine, vorzugsweise Homo- und Copolymerisate von Olefinen wie Ethylen, Propylen, Buten-1, Penten-1, Hexen-1, Hepten-1, 3-Methylbuten-1, 4-Methylbuten-1, 4-Methylpenten-1 und Octen-1. Geeignete Polyolefine sind Polyethylen, Polypropylen, Polybuten-1 oder Poly-4-methylpenten-1. Allgemein unterscheidet man bei Polyethylen (PE) High-Density-PE (HDPE), Low-Density-PE (LDPE) und linear-low-density-PE (LLDPE).

Bei einer anderen Ausführungsform der Erfindung handelt es sich bei der Komponente B um Ionomere. Diese sind im allgemeinen Polyolefine, wie sie oben beschrieben wurden, insbesondere Polyethylen, die Monomere mit Säuregruppen cokondensiert enthalten, z.B. Acrylsäure, Methacrylsäure und ggf. weitere copolymerisierbare Monomere. Die Säuregruppen werden im allgemeinen mit Hilfe von Metallionen wie Na$^+$, Ca$^{2+}$, Mg$^{2+}$ und Al$^{3+}$ in ionische, ggf. ionisch vernetzte Polyolefine umgewandelt, die sich jedoch noch thermoplastisch verarbeiten lassen (siehe z.B. US 3,264,272; 3,404,134; 3,355,319; 4,321,337). Es ist jedoch nicht unbedingt erforderlich, die Säuregruppen enthaltenden Polyolefine mittels Metallionen umzuwandeln. Auch freie Säuregruppen enthaltende Polyolefine, die dann im allgemeinen einen kautschukartigen Charakter besitzen und teilweise noch weitere copolymerisierbare Monomere enthalten, z.B. (Meth)acrylate, sind als erfindungsgemäße Komponente B geeignet.

Daneben können als Komponente B auch Polyester, vorzugsweise aromatischaliphatische Polyester eingesetzt werden. Beispiele sind Polyalkylenterephthalate, z.B. auf Basis von Ethylenglykol, Propandiol-1,3, Butandiol-1,4, Hexandiol-1,6 und 1,4-Bis-hydroxymethyl-cyclohexan, sowie Polyalkylennaphthalate.

Als Komponente B können weiterhin aromatische Polyetherketone eingesetzt werden, wie sie z.B. beschrieben sind in den Druckschriften GB 1 078 234, US 4,010,147, EP-A-0 135 938, EP-A-0 292 211, EP-A-0 275 035, EP-A-0 270 998, EP-A-0 165 406, und in der Publikation von C. K. Sham et. al., Polymer 29/6, 1016-1020 (1988).

Weiterhin können als Komponente B der zur Herstellung der erfindungsgemäßen Gehäuse erfindungsgemäß verwendeten Formmassen Polyoxyalkylene, z.B. Polyoxymethylen, und Oxymethylenpolymerisate eingesetzt werden.

Weiterhin geeignete Komponenten B sind die Polyarylensulfide, insbesondere das Polyphenylensulfid.

Gemäß einer Ausführungsform der Erfindung ist sie dabei aus 50 - 99 Gew.-% vinylaromatischen Monomeren und 1 - 50 Gew.-% mindestens eines der anderen angegebenen Monomeren aufgebaut.

Vorzugsweise ist Komponente B ein amorphes Polymerisat, wie es vorstehend als Pfropfauflage A2 beschrieben ist. Gemäß einer Ausführungsform der Erfindung wird als Komponente B ein Copolymerisat von Styrol und/oder α-Methylstyrol mit Acrylnitril verwendet. Der Acrylnitrilgehalt in diesen Copolymerisaten der Komponente B beträgt dabei 0 - 60 Gew.-%, vorzugsweise 30 - 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/-Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich vorzugsweise um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B der erfindungsgemäß verwendeten Formmassen beispielsweise um ein Gemisch aus einem Styrol/Acrylnitril-Copolymerisat und einem α-Methylstyrol/Acrylnitril-Copolymerisat handeln kann. In dem Fall, in dem die Komponente B der erfindungsgemäß verwendeten Formmassen aus einem Gemisch aus einem Styrol/Acrylnitril-Copolymerisat und einem a-Methylstyrol/Acrylnitril-Copolymerisat besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen. Die Komponente B der erfindungsgemäß verwendeten Formmassen kann jedoch auch nur aus einem einzigen Styrol/Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder α-Methylstyrols mit dem Acrylnitril in Masse, Lösung, Suspension oder wäßriger Emulsion durchgeführt werden. Die Komponente B hat vorzugsweise eine Viskositätszahl von 40 bis 100, bevorzugt 50 bis 90, insbesondere 60 bis 80. Die Bestimmung des Viskositätszahl erfolgt dabei nach DIN 53 726, dabei werden 0,5 g Material in 100 ml Dimethylformamid gelöst.

Das Mischen der Komponenten A und B und gegebenenfalls C, D, kann nach jeder beliebigen Weise nach allen bekannten Methoden erfolgen. Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten A und B durch gemeinsames Extrudieren, Kneten oder Verwalzen der Komponenten, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

In einer bevorzugten Ausführungsform enthalten die zur Herstellung der Gehäuse erfindungsgemäß verwendeten Formmassen neben den Komponenten A und B zusätzliche Komponenten C und/oder D, sowie ggf. weitere Zusatzstoffe, wie im folgenden beschrieben.

## KOMPONENTE C

Geeignete Polycarbonate C sind an sich bekannt. Sie haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate C können sowohl als Mahlgut als auch in granulierter Form eingesetzt werden. Sie liegen als Komponente C in Mengen von von 10 - 40 Gew.-%, jeweils bezogen auf die gesamte Formmasse, vor.

Der Zusatz von Polycarbonaten führt unter anderem zu höherer Thermostabilität und verbesserter Rißbeständigkeit der zur Herstellung der Gehäuse erfindungsgemäß verwendeten Formmassen.

**KOMPONENTE D**

Als Komponente D enthalten die zur Herstellung der Gehäuse erfindungsgemäß verwendeten bevorzugten thermoplastischen Formmassen 0 - 50 Gew.-%, vorzugsweise 0 - 40 Gew.-%, insbesondere 0 - 30 Gew.-% faser- oder teilchenförmige Füllstoffe oder deren Mischungen, jeweils bezogen auf die gesamte Formmasse. Dabei handelt es sich vorzugsweise um kommerziell erhältliche Produkte.

Verstärkungsmittel wie Kohlenstoffasern und Glasfasern werden üblicherweise in Mengen von 5 - 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 μm. Es können sowohl Endlosfasern (rovings) als auch Schnittglasfasern (staple) mit einer Länge von 1 - 10 μm, vorzugsweise 3 - 6 μm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken der Fa. Transmet Corp.), Metallpulver, Metallfasern, metallbeschichtete Füllstoffe, z.B. nickelbeschichtete Glasfasern sowie andere Zuschlagstoffe, die elektromagnetische Wellen abschirmen, den zur Herstellung der erfindungsgemäßen Gehäuse erfindungsgemäß verwendeten Formmassen beigemischt werden. Insbesondere kommen Aluminiumflocken (K 102 der Fa. Transmet) für EMI-Zwecke (electromagnetic interference) in Betracht. Ferner können die Massen mit zusätzlichen Kohlenstoffasern, Ruß, insbesondere Leitfähigkeitsruß, oder nickelbeschichteten C-Fasern vermischt werden.

Die zur Herstellung der Gehäuse erfindungsgemäß verwendeten Formmassen können ferner weitere Zusatzstoffe enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebazat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 - 1 Gew.-%.

Auch Siliconöle, oligomeres Isobutylen oder ähnliche Stoffe kommen als Zusatzstoffe in Frage, die üblichen Mengen betragen 0,05 - 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren wie UV-Stabilisatoren, Schmiermittel und Antistatika werden üblicherweise in Mengen von 0,01 - 5 Gew.-% verwendet, bezogen auf die gesamte Formmasse.

Die Herstellung der zur Herstellung der Gehäuse erfindungsgemäß verwendeten thermoplastischen Formmassen kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder ammatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten kann nach allen bekannten Methoden erfolgen. Vorzugsweise geschieht jedoch das Mischen durch gemeinsames Extrudieren, Kneten oder Verwalzen der Komponenten, bevorzugt bei Temperaturen von 180 - 400°C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

Die Gehäuse und Befestigungsteile dafür können gemäß einer Ausführungsform der Erfindung nach den bekannten Verfahren der Thermoplastverarbeitung aus den erfindungsgemäß verwendeten thermoplastischen Formmassen hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen.

Die Formmassen werden für die Herstellung von Gehäusen für Gartengeräte verwendet.

Gemäß einer Ausführungsform sind die Gartengeräte motorbetriebene Gartengeräte, die angetrieben werden durch Elektro- oder Verbrennungsmotoren. Zu dieser Gruppe von Gartengeräten gehören beispielsweise Gebläse, Laubsauger, Schredder, Hächsler, Spritzgeräte, die mit Motoren angetrieben werden.

Gemäß einer Ausführungsform der Erfindung sind Rasenmähergehäuse ausgenommen.

Gemäß einer Ausführungsform der Erfindung handelt es sich bei den Gartengeräten um größere Geräte, die stationär betrieben werden oder auf Rädern gelagert sind.

Gemäß einer Ausführungsform der Erfindung handelt es sich bei den Gartengeräten um solche Geräte, die vom Menschen getragen werden können, etwa in der Hand oder auf dem Rücken. Beispiele fiir solche Geräte sind Handschneide- und -Mähgeräte oder Spritzgeräte.

Die Gartengeräte werden zum Schneiden, Trennen, Blasen oder Spritzen verwendet.

Die Geräte zum Schneiden sind gemäß einer Ausführungsform der Erfindung Geräte, mit deren Hilfe pflanzliches Material abgeschnitten oder zerkleinert wird. Unter "Schneiden" ist somit auch Hauen oder Trennen, sowie Zerkleinern zu verstehen. Ein Beispiel hierfür sind Hächsler, in denen Zweige, Äste und andere Pflanzenmaterialien mit Schneid- oder Schlagmessern zerkleinert werden.

Geräte zum Blasen sind beispielsweise Laubsauger oder Laubgebläse. Unter "Blasen" wird somit sowohl ein Luftausstoß wie ein Luftansaugen verstanden. Mit Hilfe von Blasgeräten können sowohl pflanzliche wie andere Materialien aufgenommen werden aus der Umgebung, wie auch gemäß einer Ausführungsform der Erfindung verteilt werden.

Gemäß einer Ausführungsform der Erfindung sind die Geräte zum Blasen sogenannte Spritzgeräte, mit denen Flüssigkeiten oder Feststoffe in einem Luftstrom in feinverteilter Form ausgestoßen werden. Derartige Spritzgeräte werden beispielsweise zur Schädlingsbekämpfung oder Pilzbekämpfung eingesetzt.

Spritzgeräte müssen nicht unbedingt einen Motor aufweisen, sondern können auch Druckbehälter sein, in denen sich ein Pulver oder eine Flüssigkeit unter Druck befindet und durch den Überdruck versprüht beziehungsweise verspritzt wird.

Gemäß einer Ausführungsform der Erfindung sind die Gartengeräte solche, die durch Muskelkraft fortbewegt werden können. Diese Fortbewegung kann entweder auf Rollen über den Boden oder durch Tragen durch eine Person erfolgen.

Die Gehäuse können gemäß einer Ausführungsform der Erfindung aus einem Stück gebildet werden.

Gemäß einer weiteren Ausführungsform der Erfindung werden die Gehäuse aus Teilen aufgebaut, die mit Hilfe geeigneter Befestigungsmittel zu einem Gehäuse zusammengesetzt werden. Der Ausdruck "Gehäuse" beinhaltet somit einteilige Gehäuse, wie auch mehrteilige Gehäuse beziehungsweise Teile von Gehäusen und Befestigungsteile dafür.

Gemäß einer Ausführungsform der Erfindung dienen die Gehäuse zum Abdecken der mechanischen Teile der Gartengeräte sowie zum Schutz des Benutzers der Gartengeräte.

Gemäß einer Ausführungsform der Erfindung dienen die Gehäuse zum Zuoder Abführen von Gegenständen oder Substanzen in die Gartengeräte oder aus den Gartengeräten heraus. Hierbei kann es sich beispielsweise um Trichter für Hächsler handeln, über die Pflanzenmaterial, wie Äste oder Zweige dem Hächsler zugeführt werden. Es kann sich erfindungsgemäß auch um Röhrensysteme handeln, mit denen Gase oder Flüssigkeiten transportiert und geleitet werden. Beispielsweise dient bei einem Laubsauger oder Laubgebläse ein solches Röhrensystem zum Leiten und Transport der Luft beziehungsweise des Laubes.

Gemäß einer Ausführungsform der Erfindung sind die Gartengeräte keine Kleingeräte oder Handgeräte.

Gemäß einer Ausführungsform der Erfindung sind die Gartengeräte keine Mähgeräte.

Gemäß einer Ausführungsform der Erfindung werden die Gartengeräte nicht nur im Garten, sondern auch in der Landwirtschaft oder Forstwirtschaft oder in anderen Bereichen außerhalb von Gebäuden eingesetzt.

Für die Herstellung der Gehäuse werden die vorstehend beschriebenen Formmassen eingesetzt. Gemäß einer bevorzugten Ausführungsform der Erfindung werden leichtfließende Formmassen eingesetzt, die auch das Spritzgießen größerer Gehäuse erlauben, ohne daß dabei Einfallstellen auftreten. Gemäß einer bevorzugten Ausführungsform werden Komponenten A mit bimodaler Teilchengrößenverteilung eingesetzt.

Die Gehäuse sind kratzfest und witterungsbeständig. Sie sind verzugsfrei und einfallstellenfrei und weisen hervorragende mechanische Eigenschaften auf. Dieses Eigenschaftsprofil macht sie besonders vorteilhaft verwendbar für Gartengeräte, in denen mechanische Elemente vorliegen, wie in motorbetriebenen Gartengeräten. Die Gehäuse halten dabei den auftretenden mechanischen Belastungen über einen langen Zeitraum stand, insbesondere nach Bewitterung.

Die Gehäuse sind zudem feuchtigkeits- und chemikalienbeständig, wodurch der Einsatz von Reinigungsmitteln zur Reinigung der Gehäuse unkritisch ist.

Da die Gehäuse aus Formmassen hergestellt sind, die als Komponente C Polycarbonate enthalten, sind sie sehr wärmeformbeständig und widerstandsfähig gegen anhaltende Wärme. Durch Zusatz des Polycarbonats als Komponente C wird dabei die Wärmeformbeständigkeit und Schlagzähigkeit der Gehäuse weiter verbessert. Diese Gehäuse weisen zudem ein ausgewogenes Verhältnis von Zähigkeit und Steifigkeit und eine gute Dimensionsstabilität sowie eine hervorragende Widerstandsfähigkeit gegen Wärmealterung und eine hohe Vergilbungsbeständigkeit bei thermischer Belastung und Einwirkung von UV-Strahlung auf.

Gehäuse aus Formmassen, die Komponenten A und B enthalten, weisen hervorragende Oberflächenbeschaffenheiten auf, die auch ohne weitere Oberflächenbehandlung erhalten werden. Durch geeignete Modifizierung der Kautscbukmorphologie kann das Erscheinungsbild der fertigen Oberflächen der Gehäuse modifiziert werden, beispielsweise um glänzende oder matte Oberflächengestaltungen zu erreichen. Die Gehäuse zeigen bei Einwirkung von Witterung und UV-Bestrahlung einen sehr geringen Vergrauungs- bzw. Vergilbungseffekt, so daß die Oberflächeneigenschaften erhalten bleiben. Weitere vorteilhafte Eigenschaften der Gehäuse sind die hohe Witterungsstabilität, gute thermische Beständigkeit, hohe Vergilbungsbeständigkeit bei UV-Bestrahlung und thermischer Belastung, gute Spannungsrißbeständigkeit, insbesondere bei Einwirkung von Chemikalien, und ein gutes antielektrostatisches Verhalten. Zudem weisen sie eine hohe Farbstabilität auf, beispielsweise auch infolge der hervorragenden Beständigkeit gegen Vergilben und Verspröden. Die Gehäuse aus den erfindungsgemäß verwendeten thermoplastischen Formmassen zeigen sowohl bei tiefen Temperaturen wie auch nach längerer Wärmeeinwirkung keinen signifikanten Verlust an Zähigkeit bzw. Schlagzähigkeit, die auch bei der Belastung durch UV-Strahlen erhalten bleibt. Auch die Zugfestigkeit bleibt erhalten. Zudem zeigen sie ein ausgewogenes Verhältnis zwischen Steifigkeit und Zähigkeit.

Es ist möglich, zur Herstellung der Gehäuse gemäß der vorliegenden Erfindung bereits verwendete thermoplastischen Formmassen wiederzuverwerten. Aufgrund der hohen Farbstabilität, Witterungsbeständigkeit und Alterungsbeständigkeit sind die erfindungsgemäß verwendeten Formmassen sehr gut geeignet für die Wiederverwendung. Dabei kann der Anteil an wiederverwendeter (recyclierter) Formmasse hoch sein. Bei Verwendung von beispielsweise 30 Gew.-% bereits verwendeter Formmasse, die in gemahlener Form den erfindungsgemäß verwendeten Formmassen beigemischt wurde, änderten sich die relevanten Materialeigeschaften wie Fließfähigkeit, Vicat-Erweichungstemperatur und Schlagzähigkeit der Formmassen und der daraus hergestellten Gehäuse nicht signifikant. Ähnliche Ergebnisse wurden bei der Untersuchung der Witterungsbeständigkeit erhalten. Die Schlagzähigkeit war auch bei Verwendung von wiederverwerteten thermoplastischen Formmassen über lange Zeit konstant, siehe Lindenschmidt, Ruppmich, Hoven-Nievelstein, International Body Engineering Conference, 21. - 23. September 1993, Detroit, Michigan, USA, Interior and Exterior Systems, Seiten 61 bis 64. Auch die Vergilbungsbeständigkeit blieb erhalten. Die Erfindung wird anhand der nachfolgenden Beispiele näher erläutert.

BEISPIELE

Beispiel 1

*Herstellung von kleinteiligem Pfropfcopolymerisat (A)*

(a1) 16 Teile Butylacrylat und 0,4 Teile Tricyclodecenylacrylat wurden in 150 Teilen Wasser unter Zusatz von einem Teil des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurde innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 76 nm ermittelt. Die Teilchengrößenverteilung war eng (Quotient Q = 0,29).

(a2) 150 Teile des nach (a1) erhaltenen Polybutylacrylat-Latex wurden mit 40 Teilen einer Mischung aus Styrol und Acrylnitril (Gewichtsverhältnis 75 : 25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%.

Beispiel 2

*Herstellung von großteiligem Pfropfcopolymerisat (A)*

(a1) Zu einer Vorlage aus 2,5 Teilen des in der Stufe (a1) aus Beispiel 1 hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengröße (Gewichtsmittel des Latex) wurde zu 288 nm ermittelt. Die Teilchengrößenverteilung war eng (Q = 0,1).

(a2) 150 Teile dieses Latex wurden mit 40 Teilen einer Mischung aus Styrol und Acrylnitril (Verhältnis 75 : 25) und 110 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Das bei der Pfropfmischpolymerisation erhaltene Polymerisationsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 27 % ermittelt.

Beispiel 3

*Herstellung von großteiligem Pfropfcopolymerisat (A)*

(a1) 16 Teile Butylacrylat und 0,4 Teile Tricyclodecenylacrylat wurden in 150 Teilen Wasser unter Zusatz von 0,5 Teilen des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatten einen Feststoffgehalt von 40 Gew.-%. Die mittlere Teilchengröße (Gewichtsmittel) wurde zu 216 nm ermittelt. Die Teilchengrößenverteilung war eng (Q = 0,29).

(a2) 150 Teile des nach (a1) erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Nach Beendigung der ersten Stufe der Pfropfmischpolymerisation hatte das Pfropfmischpolymerisat einen Pfropfgrad von 17 %. Diese Pfropfmischpolymerisatdispersion wurde ohne weitere Zusatzstoffe mit 20 Teilen einer Mischung aus Styrol und Acrylnitril (Verhältnis 75 : 25) weitere 3 Stunden polymerisiert. Nach Beendigung der Pfropfmischpolymerisation wurde das Produkt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die mittlere Teilchengröße der Latexteilchen wurde zu 238 nm ermittelt.

Beispiel 4

*Herstellung von großteiligem Pfropfcopolymerisat (A)*

(a1) Zu einer Vorlage aus 2,5 Teilen des in Beispiel 3 (Komponente A) hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengröße (Gewichtsmittel) des Latex wurde zu 410 nm ermittelt. Die Teilchengrößenverteilung war eng (Q = 0,1).

(a2) 150 Teile des nach (a1) erhaltenen Polybutylacrylat-Latex wuren mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75 : 25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35% ermittelt, die mittlere Teilchengröße der Latexteilchen betrug 490 nm.

Beispiel 5

*Herstellung von großteiligem Pfropfcopolymerisat (A)*

(a1) 98 Teile Acrylsäurebutylester und 2 Teile Tricyclodecenylacrylat wurden in 154 Teilen Wasser unter Zusatz von 2 Teilen Dioctylsulfosuccinatnatrium (70%ig) als Emulgator und 0,5 Teilen Kaliumpersulfat unter Rühren 3 Stunden bei 65°C polymerisiert. Man erhielt eine etwa 40%ige Dispersion. Die mittlere Teilchengröße des Latex war etwa 100 um.
Zu einer Vorlage aus 2,5 Teilen dieses Latex, 400 Teilen Wasser sowie 0,5 Teilen Kaliumpersulfat wurde bei 65°C eine Mischung von 49 Teilen Acrylsäurebutylester, 1 Teil Tricyclodecenylacrylat und 0,38 Teilen des Emulgators innerhalb von 1 Stunde zugegeben. Im Verlauf einer weiteren Stunde fügte man eine Mischung von 49 Teilen Acrylsäurebutylester, 1 Teil Tricyclodecenylacrylat und 0,76 Teilen Emulgator zu. Nach Zugabe von 1 Teil Kaliumpersulfat in 40 Teilen Wasser wurde schließlich innerhalb von 2 Stunden eine Mischung aus 196 Teilen Acrylsäurebutylester, 4 Teilen Tricyclodecenylacrylat sowie 1,52 Teilen des Emulgators zugetropft. Die Polymerisatmischung wurde anschließend noch 2 Stunden bei 65°C nachpolymerisiert. Man erhielt eine etwa 40%ige Dispersion mit einem mittleren Teilchendurchmesser von etwa 500 nm. Gab man statt insgesamt 300 Teilen an Monomeren nur 100 Teile zu, so erhielt man einen Latex mit einem mittleren Teilchendurchmesser von etwa 300 nm.

(a2) 465 Teile Styrol und 200 Teile Acrylnitril wurden in Gegenwart von 2500 Teilen des Polymerisatlatex nach (a1) mit der mittleren Teilchengröße 0,1 bzw. 0,3 bzw. 0,5 μm, 2 Teilen Kaliumsulfat, 1,33 Teilen Laurylperoxid und 1005 Teilen Wasser unter Rühren bei 60°C polymerisiert. Man erhielt eine 40%ige Dispersion, aus der das Festprodukt durch Zusatz einer 0,5%igen Calciumchloridlösung ausgefällt, mit Wasser gewaschen und getrocknet wurde.

Beispiel 6

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-%, bezogen auf das Copolymerisat, und eine Viskositätszahl von 80 ml/g.

Beispiel 7

*Herstellung von Copotymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-%, bezogen auf das Copolymerisat, und eine Viskositätszahl von 60 ml/g.

Beispiel 8

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 27 Gew.-%, bezogen auf das Copolymerisat, und eine Viskositätszahl von 80 ml/g.

**Vergleichsbeispiel 1**

*ABS-Polymerisat*

Als Vergleichspolymerisat wurde ein Polybutadien-Kautschuk verwendet, der gepfropft war mit einem Styrol-Acrylnitril-Copolymer als Komponente (A), die in einer Styrol-Acrylnitril-Copolymer-Matrix als Komponente (B) vorlag. Der Gehalt an Pfropfkautschuk betrug 29 Gew.-%, bezogen auf das Gesamtgewicht des fertigen Polymerisats.

**Vergleichsbeispiel 2**

*ABS-Polymerisat*

Als Vergleichspolymerisat wurde ein Polybutadien-Kautschuk verwendet, der gepfropft war mit einem Styrol-Acrylnitril-Copolymer als Komponente (A), die in einer Styrol-Acrylnitril-Copolymer-Matrix als Komponente (B) vorlag. Der Gehalt an Pfropfkautschuk betrug 23 Gew.-%, bezogen auf das Gesamtgewicht des fertigen Polymerisats.

**Vergleichsbeispiel 3**

*HIPS-Polymerisat*

Als weitere Formmasse zu Vergleichszwecken wurde ein HIPS-Polymerisat (High Impact Polystyrene: schlagzähes Polystyrol) verwendet, daß aus Polystyrol mit einem Anteil von 6,5 Gew.-% an Polybutadien-Kautschuk bestand. Das Dämpfungsmaximum der mechanischen Dämpfung beträgt -75°C. Der MVI 200/5 beträgt 4 ml/10 min.

**Vergleichsbeispiel 4**

*PP-Polymerisat*

Als weitere Formmasse zu Vergleichszwecken wurde ein Blockcopolymerisat aus Polypropylen und etwa 15 Gew.-% Ethylen/Propylen-Kautschuk verwendet, daß eine Schmelzviskusität MVI 230/2,16 = 8 cm$^3$/10 min aufwies.

Es wird fiir die Spritzgießverarbeitung verwendet. Die Glasübergangstemperatur des Kautschukanteils beträgt -50°C. Es handelt sich um ein nukleiertes Polypropylen.

Beispiel 9

Entsprechend den Angaben in der nachstehenden Tabelle 1 werden die angegebenen Mengen der entsprechenden Polymerisate (A) und (B) bzw. der Vergleichsmassen in einem Schneckenextruder bei einer Temperatur von 200°C - 230°C gemischt. Aus den dadurch gebildeten Formmassen wurden Formkörper in Form einer Fernseherrückwand hergestellt. Das hergestellte Teil wies eine Wandstärke von 2,5 mm auf und ein Schußgewicht von 1,7 kg. In der nachstehenden Tabelle 1 ist das Spritzgießverhalten von erfindungsgemäßen Formmassen und Vergleichsformmassen aufgeführt.

# Tabelle 1

| Formmasse | Komp. aus Bsp. | Teile | Spritzgieß-Verhalten | | | |
| --- | --- | --- | --- | --- | --- | --- |
| | | | Füllung der Form bei °C | Farbe (visuell) | Einfallstellen | Verzug |
| I | A:1<br>A:3<br>B:6<br>B:7 | 25<br>5<br>5<br>65 | 250 | gut | nein | nein |
| II | A:1<br>A:3<br>B:6<br>B:7 | 25<br>10<br>10<br>55 | 280 | gut | nein | NEIN |
| Vergl. II | Vergl. 2 | | 280 | vergilbt | nein | nein |
| Vergl. III | Vergl. 3 | | 240 | leicht vergilbt | nein | nein |
| Vergl. IV | Vergl. 4 | | 220 | gut | ja | ja |

EP 0 914 373 B1

Aus den in der Tabelle angegebenen Ergenissen geht hervor, daß die erfindungsgemäßen Formmassen ein wesentlich besseres Spritzgießverhalten zeigen als die Vergleichsformmassen.

Die Witterungsbeständigkeit der Formmassen wurde untersucht durch Freibewitterung in Limburgerhof. Es wurden dabei ungefärbte Formmassen eingesetzt. Für eine erfindungsgemäße Formmasse oder eine Vergleichsformmasse wurde der Gelbwert nach DIN 6167 bestimmt, sowie die mechanischen Eigenschaften, d.h. die Durchstoßarbeit nach ISO 6603-2. Die Ergebnisse sind in den nachstehenden Tabellen 2 und 3 wiedergegeben.

## Tabelle 2

**Vergilbung nach Bewitterung**

| Formmasse | Komp. aus Bsp. | Teile | Gelbwert nach DIN 6167 | | | | | | | |
|---|---|---|---|---|---|---|---|---|---|---|
| | | | Tage | | | | | Wochen | | |
| | | | 0 | 5 | 10 | 20 | 30 | 8 | 16 | 24 |
| II | A:1 A:3 B:6 B:7 | 25 10 10 55 | 34 | - | - | - | - | 20 | 26 | 31 |
| Vergl. I | Vergl. 1 | | 40 | 41 | 43 | 47 | 48 | - | - | - |

## Tabelle 3

**Mechanik nach Bewitterung**

| Formmasse | Komp. aus Bsp. | Teile | Durchstoßarbeit (ISO 6603-2) in Nm nach Freibew. | | | | | | |
|---|---|---|---|---|---|---|---|---|---|
| | | | Tage | | | | | Wochen | |
| | | | 0 | 5 | 10 | 20 | 30 | 8 | 12 |
| II | A:1 A:3 B:6 B:7 | 25 10 10 55 | 39 | - | - | - | - | 30 | 20 |
| Vergl. I | Vergl. 1 | | 30 | 15 | 3 | 3 | 3 | - | - |

Aus den Tabellen 2 und 3 geht hervor, daß die erfindungsgemäßen Formmassen einen wesentlich niedrigeren

17

Gelbwert aufweisen und eine wesentlich höhere Durchstoßarbeit zeigen als die Vergleichsformmassen. sie sind somit wesentlich witterungsbeständiger als die Vergleichsformmassen.

**Patentansprüche**

1. Verwendung einer von ABS verschiedenen thermoplastischen Formmasse, enthaltend, bezogen auf die Summe der Mengen der Komponenten A B, und C und ggf. D, die insgesamt 100 Gew.-% ergibt.

   a: 1 - 99 Gew.-% eines teilchenförmigen Emulsionspolymerisats mit einer Glasübergangstemperatur unterhalb von 0°C und einer mittleren Teilchengröße von 50 - 1000 nm als Komponente A, wobei es sich um ein Pfropfcopolymerisat handelt aus

   a1: 1 - 99 Gew.-% einer teilchenförmigen Pfropfgrundlage A1 mit einer Glasüberganstemperatur unterhalb von 0°C, bestehend aus den Monomeren

   a11: 80 - 99,99 Gew.-% eines $C_{1-8}$-Alkylesters der Acrylsäure als Komponente A11,

   a12: 0,01 - 20 Gew.-% mindestens eines polyfunktianellen vernetzenden Monomeren als Komponente A12,

   a2: 1 - 99 Gew.-% einer Pfropfauflage A2 aus den Monomeren, bezogen auf A2,

   a21: 40 - 100 Gew.-% Einheiten eines vinylaromatischen Monomeren als Komponente A21 und

   a22: bis 60 Gew.-% Einheiten eines ethylenisch ungesättigten Monomeren als Komponente A22,

   wobei die Pfropfauflage A2 aus mindestens einer Pfropfhülle besteht

   b: 1 - 99 Gew.-% mindestens eines amorphen oder teilkristallinen Polymerisats als Komponente B,

   c: 10 - 40 Gew.-% Polycarbonate als Komponente C, und

   d: 0 - 50 Gew.-% faser- oder teilchenförmige Füllstoffe oder deren Gemische als Komponente D

   zur Herstellung von Gehäusen für Gartengeräte, die zum Schneiden, Trennen, Blasen oder Spritzen dienen.

2. Verwendung nach Anspruch 1, **dadurch gekennzeichnet, daß** die Teilchengrößenverteilung der Komponente A bimodal ist, wobei 60 - 90 Gew.-% eine mittlere Teilchengröße von 50 - 200 nm und 10 - 40 Gew.-% eine mittlere Teilchengröße von 50 - 400 nm aufweisen, bezogen auf das Gesamtgewicht der Komponente A.

3. Verwendung nach einem der Ansprüche 1 oder 2, **dadurch gekennzeichnet, daß** die Gehäuse fiir motorbetriebene Gartengeräte verwendet werden.

**Claims**

1. The use of a thermoplastic molding composition which is not ABS and which comprises, based on the total of the amounts of components A, B, and C, and, where appropriate, D, which together give 100% by weight.

   a: from 1 to 99% by weight of a particulate emulsion polymer with a glass transition temperature below 0°C and with a median particle size of from 50 to 1000 nm as component A, this being a graft polymer made from

   a1: from 1 to 99% by weight of a particulate graft base A1 with a glass transition temperature below 0°C, composed of the following monomers

   a11: from 80 to 99.99% by weight of a $C_1$-$C_8$-alkyl acrylate as component A11,

   a12: from 0.01 to 20% by weight of at least one polyfunctional crosslinking monomer as component A12,

a2: from 1 to 99% by weight of a graft A2 made from the following monomers, based on A2,

a21: from 40 to 100% by weight of units of a vinylaromatic monomer as component A21, and

a22: up to 60% by weight of units of an ethylenically unsaturated monomer as component A22,

where the graft A2 is composed of at least one graft shell

b: from 1 to 99% by weight of at least one amorphous or semicrystalline polymer as component B,

c: from 10 to 40% by weight of polycarbonates as component C, and

d: from 0 to 50% by weight of fibrous or particulate fillers or a mixture of these as component D

for producing casings for garden devices which serve for cutting, dividing, blowing, or spraying.

2. The use as claimed in claim 1, wherein the particle size distribution of component A is bimodal, where, based on the total weight of component A, from 60 to 90% by weight have a median particle size of from 50 to 200 nm and from 10 to 40% by weight have a median particle size of from 50 to 400 nm.

3. The use as claimed in claim 1 or 2, wherein the casings are used for motor-driven garden devices.

**Revendications**

1. Utilisation d'une masse de façonnage thermoplastique différente de ABS, contenant, par rapport à la somme des quantités des composants A, B, et C et éventuellement D qui donne au total 100% en poids,

a : 1-99% en poids d'un produit de polymérisation en émulsion particulaire, ayant une température de transition vitreuse en dessous de 0°C et une taille moyenne des particules de 50-1000 nm, comme composant A, pour lequel il s'agit d'un copolymère de greffage,
a1 : de 1-99% en poids d'une base de greffage particulaire A1 ayant une température de transition vitreuse inférieure à 0°C, constituée des monomères
a11 : 80-99,99% en poids d'un ester alkylique en $C_1$-$C_8$ de l'acide acrylique, comme composant A11,
a12: 0,01-20% en poids d'au moins un monomère réticulant polyfonctionnel, comme composant A12,
a2 : de 1-99% en poids d'une couche de greffage A2 à base des monomères, par rapport à A2,
a21 : 40-100% en poids d'unités d'un monomère vinyl-aromatique, comme composant A21, et
a22 : jusqu'à 60% en poids d'unités d'un monomère éthyléniquement insaturé, comme composant A22,

la couche de greffage A2 étant constituée d'au moins une enveloppe de greffage,

b : 1-99% en poids d'au moins un polymère amorphe ou partiellement cristallin, comme composant B,
c : 10-40% en poids de polycarbonates, comme composant C, et
d : 0-50% en poids de matières de remplissage fibreuses ou particulaires ou de leurs mélanges, comme composant D,

pour la fabrication de corps pour outils de jardin, qui servent à tailler, couper, souffler ou arroser.

2. Utilisation suivant la revendication 1, **caractérisée en ce que** la répartition des tailles de particules du composant A est bimodale, 60-90% en poids présentant une taille moyenne des particules de 50-200 nm et 10-40% en poids une taille moyenne des particules de 50-400 nm, par rapport au poids total du composant A.

3. Utilisation suivant l'une des revendications 1 et 3, **caractérisée en ce que** les corps sont utilisés pour des outils de jardin entraînés par moteur.